# EUROPÄISCHE PATENTANMELDUNG

(11) **EP 4 062 751 A1**
(43) Veröffentlichungstag der Anmeldung: **28.09.2022**
(21) Anmeldenummer: 22157870.1
(22) Anmeldetag: 22.02.2022
(51) Int. Cl.: A01G 9/16, A01G 31/02, A01G 31/06

(54) **GERÄT**

(30) Priorität: 24.03.2021 BE 202105222
(71) Anmelder: Miele & Cie. KG, 33332 Gütersloh (DE)
(72) Erfinder: Schneider, Felix, 81249 München (DE)

(57) **Zusammenfassung**

Die Erfindung betrifft ein Gerät (1), umfassend ein Fluidleitungssystem mit einem Wasserspeicher (2) zur Aufnahme und Bereitstellung von in dem Wasserspeicher (2) enthaltenem Wasser (3) für einen mit dem Gerät (1) zu erfüllenden Zweck, wobei der Wasserspeicher (2) herausnehmbar in das Gerät (1) eingesetzt ist und das Fluidleitungssystem ein mit dem Wasserspeicher (2) korrespondierendes, zwischen einer Offenstellung und einer Schließstellung schaltbares Ventil (4) aufweist, dessen Offenstellung bei in das Gerät (1) eingesetztem Wasserspeicher (2) gegeben ist.

## Beschreibung

Die Erfindung betrifft ein Gerät nach dem Oberbegriff des Patentanspruches 1, bei dem es sich beispielsweise um ein Haushaltsgerät, wie zum Beispiel um eine Pflanzenaufzuchtstation mit mindestens einer die Aufzucht der Pflanzen ermöglichenden Klimakammer handeln kann und das dem entsprechend ein Fluidleitungssystem mit einem Wasserspeicher zur Aufnahme und Bereitstellung von in dem Wasserspeicher enthaltenem Wasser für einen mit dem Gerät zu erfüllenden Zweck umfasst, wobei der Wasserspeicher herausnehmbar in das Gerät eingesetzt ist, und zwar unabhängig davon, ob der Wasserspeicher manuell aufgefüllt werden muss oder zum Auffüllen seines Inhalts an ein öffentliches Wassernetz angeschlossen ist.

Eine Vorrichtung zur Aufzucht von Pflanzen mit einer Klimatisierungseinrichtung, die eine zuvor erwähnte Pflanzenaufzuchtstationen darstellt, geht beispielsweise aus der DE 10 2018 101 698 B3 hervor. In der Druckschrift wird in verschiedenen Ausführungsbeispielen beschrieben, dass die Vorrichtung zur Aufzucht von Pflanzen eine Bewässerungsvorrichtung, eine Klimatisierungseinrichtung, einen Aufnahmeraum zum Aufnehmen einer oder mehrerer Saatmatten und eine Steuerungseinheit aufweist, die dazu eingerichtet ist, mittels einer Programmsteuerung die Bewässerungsvorrichtung, gegebenenfalls auch eine Beleuchtungseinrichtung und die Klimatisierungseinrichtung zu steuern. Die vorgestellte Lösung ist insbesondere geeignet, um auf kleinstem Raum beispielsweise frisches Gemüse, Sprossen oder andere Pflanzen für die tägliche, gesunde Ernährung zu züchten. Innerhalb der Vorrichtung zur Aufzucht von Pflanzen ist nach dem Offenbarungsgehalt der Druckschrift zudem ein Luftfeuchte-Sensor vorhanden, der die Luftfeuchtigkeit in dem Aufnahmeraum erfasst und gemeinschaftlich mit mindestens einem Temperatursensor und der Steuerungseinheit optimale Bedingungen zur Aufzucht der Pflanzen ermöglicht. Zur Bewässerung der Pflanzen ist darüber hinaus ein Wasserspeicher mit einem Wasservorrat vorhanden.

Die Entnahme des Wasserspeichers ist bei Geräten der hier betroffenen Art beispielsweise erforderlich, um den Wasserspeicher mit frischem Wasser aufzufüllen und/oder diesen zu reinigen. Bei bislang bekannten Ausführungen derartiger Geräte mit einem Wasserspeicher besteht allerdings das Problem, dass bei der Entnahme des Wasserspeichers aus dem Gerät das bis dahin geschlossene Fluidleitungssystem zu einem offenen Fluidleitungssystem wird und Wasser unkontrolliert in den Innenraum des Gerätes ablaufen kann. Dies führt nicht nur zu der Gefahr einer Verunreinigung des Gerätes, sondern auch zu einer daraus resultierenden Keimentwicklung, die in jedem Fall verhindert werden muss.

Der Erfindung stellt sich somit das Problem, ein Gerät, das ein Fluidleitungssystem mit einem Wasserspeicher zur Aufnahme und Bereitstellung von in dem Wasserspeicher enthaltenem Wasser umfasst, für einen mit dem Gerät zu erfüllenden Zweck bereitzustellen, bei dem der Wasserspeicher herausnehmbar in das Gerät eingesetzt ist und kein Wasser aus dem Fluidleitungssystem in den Innenraum des Gerätes entweichen kann, wenn der Wasserspeicher aus dem Gerät entnommen wird.

Erfindungsgemäß wird dieses Problem durch ein Gerät mit den Merkmalen des Patentanspruchs 1 gelöst.

Vorteilhafte Ausgestaltungen und Weiterbildungen der Erfindung ergeben sich aus den nachfolgenden Unteransprüchen.

Ein Gerät, umfassend ein Fluidleitungssystem mit einem Wasserspeicher zur Aufnahme und Bereitstellung von in dem Wasserspeicher enthaltenem Wasser für einen mit dem Gerät zu erfüllenden Zweck, wobei der Wasserspeicher herausnehmbar in das Gerät eingesetzt ist, wurde erfindungsgemäß dahingehend weitergebildet, dass das Fluidleitungssystem ein mit dem Wasserspeicher korrespondierendes, zwischen einer Offenstellung und einer Schließstellung schaltbares Ventil aufweist, dessen Offenstellung bei in das Gerät eingesetztem Wasserspeicher gegeben ist.

Durch die Möglichkeit, den Wasserspeicher aus dem Gerät zu entnehmen, kann dieser beispielsweise auch in einem Geschirrspülgerät gereinigt werden, was die Effizienz der Reinigung gegenüber einer manuellen Säuberung maßgeblich steigert. Zudem wird das Befüllen des Wasserspeichers mit frischem Wasser durch die Entnahmemöglichkeit vereinfacht, sodass die Handhabung des Wasserspeichers und damit des Gerätes insgesamt verbessert wird. Durch die Verwendung des erfindungsgemäßen Ventils wird es möglich, den Wassertank problemlos aus dem Gerät zu entfernen, ohne dass Wasser in den Innenraum des Gerätes gelangt und so zu einer Verunreinigung oder Verkeimung des Gerätes führen kann. Das Ventil sorgt erfindungsgemäß für eine automatische Unterbrechung in dem Fluidleitungssystem des Gerätes und stoppt damit den Strömungsverlauf des in einem Kreislauf umlaufenden Wassers. Die vorgeschlagene Lösung der Verwendung mindestens eines Ventils ist einfach umsetzbar und erfordert einen lediglich geringen konstruktiven Aufwand. Es ist anwenderfreundlich und erspart durch die Möglichkeit der manuellen Befüllung des Wasservorrats mit frischem Wasser eine zusätzliche Pumpe in dem Gerät, welche das Frischwasser zuführt. Somit kann das Gerät insgesamt einfacher ausgeführt werden, als bekannte Ausführungen.

Eine erste Ausgestaltung der Erfindung ist darin zu sehen, dass das Fluidleitungssystem bei in das Gerät eingesetztem Wasserspeicher einen in sich geschlossenen Kreislauf bildet. Diese Ausführungsform erlaubt damit eine sehr sparsame Verwendung kostbaren Frischwassers.

Eine Fluidströmung innerhalb des Fluidleitungssystems kann insbesondere aufrechterhalten werden, wenn das Fluidleitungssystem des Gerätes wenigstens eine Pumpe aufweist. Wenn hier davon gesprochen wird, dass das Fluidleitungssystem "wenigstens" eine Pumpe aufweist, so ist damit gemeint, dass der Kreislauf zur Erfüllung des Zwecks des Geräts in der Regel mit einer Pumpe auskommt, wobei nicht ausgeschlossen werden kann, dass an anderer Stelle des Geräts möglicherweise eine weitere Pumpe Verwendung finden könnte.

Eine spezielle Ausführungsvariante des erfindungsgemäßen Gerätes ist darüber hinaus darin zu sehen, dass das Gerät mindestens zwei, in ihrer Höhenlage übereinander angeordnete und strömungsleitend miteinander gekoppelte Klimakammern aufweist. Mit diesem Merkmal wird auch deutlich, dass der zuvor beschriebene, in sich geschlossenen Kreislauf des Fluidleitungssystems sinnvoll ist, da sämtliche Klimakammern von dem gleichen Wasserspeicher mit frischem Wasser versorgt werden. So besteht beispielsweise die Möglichkeit, das frische Wasser mittels der erwähnten Pumpe aus dem Wasserspeicher in die geodätisch oberste Klimakammer zu fördern, wo es seinen bestimmungsgemäßen Gebrauch findet, sodass nur das überschüssige, nicht benötigte Wasser anschließend in die darunterliegende Klimakammer überführt wird, um letztlich wieder in den Wasserspeicher zurückgeführt zu werden. Dies hat zur Folge, dass lediglich das verbrauchte Wasser durch Auffüllen des Wasserspeichers ersetzt werden muss, was zu der zuvor erwähnten Wasserersparnis führt.

Entsprechend einer weiterbildenden Maßnahme der Erfindung ist dabei in vorteilhafter Weise vorgesehen, dass das mittels der Pumpe in die geodätisch oberste Klimakammer geförderte Wasser mittels der Gravitationskraft in jede unterhalb dieser Klimakammer angeordnete, weitere Klimakammer beziehungsweise zuletzt in den Wasserspeicher abgeführt wird. Anders ausgedrückt könnte theoretisch die Pumpe nach dem Befüllen der obersten Klimakammer abgeschaltet werden, ohne dass der Strömungskreislauf innerhalb des Fluidleitungssystems dadurch unterbrochen wird.

Hinsichtlich der Ausführung des Ventils ist erfindungsgemäß vorgesehen, dass das Ventil mechanisch, elektrisch oder elektromagnetisch schaltbar ist. Diese Varianten haben sich als besonders vorteilhaft erwiesen, wobei jedoch an dieser Stelle nicht ausgeschlossen wird, dass auch hydraulisch oder pneumatisch ansteuerbarer Ventile durchaus für den erfindungsgemäßen Zweck verwendbar sein können. Ein mechanisch schaltbares Ventil hat beispielsweise den maßgeblichen Vorteil, dass es in seinem Aufbau sehr einfach gehalten werden kann und wenig störanfällig ist. Die lange Lebensdauer derartiger Ventile reduziert die Wahrscheinlichkeit erforderlicher Reparatur- oder Wartungsarbeiten an dem erfindungsgemäßen Gerät erheblich. Für die elektrisch oder elektromagnetisch schaltbare Variante eines Ventils gilt, dass diese schaltungstechnisch einen höheren Aufwand erfordert, als eine mechanische Ausführung. Vorteilhaft ist hierbei jedoch, dass eine Überwachung der Funktionalität des Ventils auch von außerhalb des Gerätes problemlos möglich ist. Zudem sind derartige Ventile sehr zuverlässig und langlebig.

Insbesondere für die Ansteuerung eines elektrischen oder elektromagnetischen Ventils ist es erforderlich, dass das Gerät eine elektronische Steuerungsvorrichtung aufweist. Mittels der elektronischen Steuerungsvorrichtung kann dabei einerseits die Ansteuerung des Ventils erfolgen, wobei mittels der elektronischen Steuerungsvorrichtung zusätzlich eine Detektierung der Anwesenheit des Wasserspeichers in dem Gerät umsetzbar ist. Anders ausgedrückt wird die elektronische Steuerungsvorrichtung dazu verwendet, zu erfassen, ob der Wasserspeicher in das Gerät eingesetzt ist oder nicht, sodass anhand des dadurch erzeugten Signals das Ventil in eine Offenstellung oder Schließstellung überführt werden kann. Bei eingesetztem Wasserspeicher ist das Ventil demnach in der Offenstellung, während es sich bei entferntem Wasserspeicher in der Schließstellung befindet.

Hinsichtlich der Ausführung des Ventils ist es von Vorteil, wenn das mechanisch schaltbare Ventil aus einem in eine Ablauföffnung einer Klimakammer eingesetzten, klimakammerseitig mit einer Dichtung versehenen Kolben besteht, der bei in das Gerät eingesetztem Wasserspeicher mit einer Anlagefläche des Wasserspeichers korrespondierend das Ventil gegen die Kraft einer Feder in seiner Offenstellung fixiert. Dabei wird insbesondere die geodätisch am tiefsten gelegene Klimakammer des Gerätes mit einem derartigen Ventil ausgestattet, das in die Ablauföffnung dieser Klimakammer integriert ist.

Während nur die unterste Klimakammer des erfindungsgemäßen Gerätes ein derartiges Ventil aufweist, verfügt jede vorhandene Klimakammer über eine Ablauföffnung, die jeweils am tiefsten Punkt der Klimakammer angeordnet ist. Auf diese Weise kann der in sich geschlossenen Kreislauf des Fluidleitungssystems mit einfachen Mitteln realisiert werden.

Bei der mit dem Kolben des Ventils korrespondierenden Anlagefläche des Wasserspeichers kann es sich um eine lokal begrenzte Erhebung handeln, die an dem Wasserspeicher ausgebildet ist, wobei eine spezielle Ausführungsvariante darin besteht, dass die Anlagefläche ein an dem Wasserspeicher ausgebildeter, erhabener Steg ist.

Wie eingangs bereits ausgeführt wurde, handelt es sich bei dem erfindungsgemäßen Gerät insbesondere um ein Haushaltsgerät. Eine sehr spezielle Ausführungsvariante besteht darin, dass das Gerät eine Pflanzenaufzuchtstation mit mindestens einer die Aufzucht von Pflanzen ermöglichenden Klimakammer ist. Die Aufzucht von Pflanzen mit dem erfindungsgemäßen Gerät hat zur Folge, dass nicht gänzlich auszuschließen ist, dass Partikel oder Inhaltsstoffe in das Frischwasser geraten, die zu einer Verunreinigung des frischen Wassers führen können. Dabei kann es sich beispielsweise um Keime oder kleinste Schwebepartikel handeln, die letztlich jedoch eine Verunreinigung darstellen. Insofern ist eine Weiterbildung der Erfindung von maßgeblichem Vorteil, die darin besteht, dass das Gerät mindestens einen Filter zur Filterung des Wassers aufweist. Im einfachsten Fall kann es sich hierbei um Aktivkohlefilter handeln, die jegliche Verunreinigungen oder Kleinstpartikel aus dem Wasser herausfiltern und zudem eine entkeimende Wirkung aufweisen können.

Zur Erleichterung des Einsetzens und der Entnahme des Wasserspeichers wird gemäß einer vorteilhaften Ausgestaltung der Erfindung vorgeschlagen, dass der Wasserspeicher über Gleitschienen oder Rollenführungen bewegbar in das Gerät eingesetzt ist.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine räumliche Ansicht eines als Pflanzenaufzuchtstationen gestalteten Gerätes,
- Figur 2:: den Blick in den Innenraum des Gerätes aus Figur 1 gemäß dem Schnittverlauf II-II aus Figur 1,
- Figur 3:: ausschnittsweise den unteren Abschnitt des Gerätes aus Figur 1 mit entnommenem Wasserspeicher in einer Explosivdarstellung,
- Figur 4:: ausschnittsweise einen Blick auf ein elektrisch schaltbares Ventil in einer Offenstellung,
- Figur 5:: ausschnittsweise einen Blick auf ein elektrisch schaltbares Ventil in einer Schließstellung,
- Figur 6:: ausschnittsweise einen Blick auf ein mechanisch schaltbares Ventil in einer Offenstellung
- und Figur 7:: einen Wasserspeicher in einer nur teilweise aus dem Gerät entfernten Position.

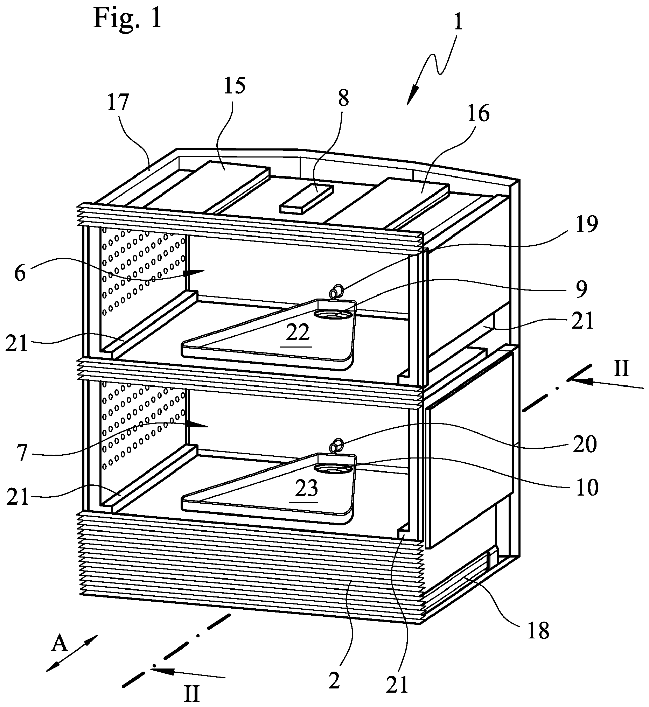

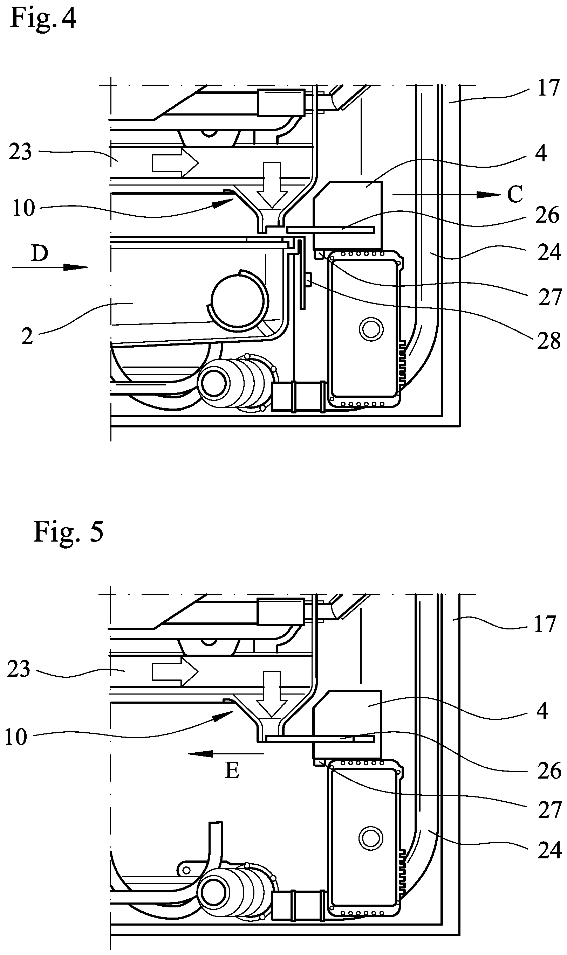

In der Figur 1 ist zunächst eine räumliche Ansicht eines als Pflanzenaufzuchtstationen gestalteten Gerätes 1 dargestellt. Innerhalb des Gehäuses 17 dieses Gerätes 1 befinden sich zwei baugleich ausgeführte Klimakammern 6 und 7, von denen die Klimakammer 6 geodätisch oberhalb der Klimakammer 7 angeordnet ist. Die Klimakammer 6 weist dabei eine Wasserschale 22 auf, die an ihrem tiefsten Punkt mit einer Ablauföffnung 9 ausgestattet ist, über die nicht benötigtes Wasser in die darunter befindliche Klimakammer 7 abgeführt wird. Zur Zuführung von Frischwasser weist die Klimakammer 6 rückwandseitig einen Wasserzulauf 19 auf, der die in der Klimakammer 6 vorhandenen Pflanzen mit frischem Wasser versorgt. Auch die unterhalb der Klimakammer 6 angeordnete Klimakammer 7 verfügt über eine Wasserschale 23 mit einer Ablauföffnung 10 an ihrem tiefsten Punkt, die der Abführung nicht benötigten Wassers in den darunter befindlichen Wasserspeicher 2 dient. Der Wasserspeicher 2 ist vorliegend als ein Wassertank ausgeführt und versorgt die obere Klimakammer 6 über den Wasserzulauf 19 mit frischem Wasser, wozu eine in der Figur 1 nicht gezeigte Pumpe 5 zum Einsatz kommt. Für den Fall einer Unterversorgung mit frischem Wasser weist die Klimakammer 7 zusätzlich einen Wasserzulauf 20 in ihrer Rückwand auf. Beide Klimakammern 6 und 7 verfügen über seitlich angeordnete Führungsschienen 21, die der Einführung nicht dargestellter Pflanzkästen dienen. Jeder der Pflanzkästen bildet dabei einen Bestandteil eines bei eingesetztem Wasserspeicher 2 in sich geschlossenen Fluidleitungssystems des Gerätes 1. Der Wasserspeicher 2 ist entnehmbar in das Gerät 1 eingesetzt. Zur Führung des Wasserspeichers 2 verfügt das Gerät 1 über seitliche Gleitschienen 18 in dem Aufnahmeraum des Wasserspeichers 2. Diese ermöglichen eine Bewegung des Wasserspeichers 2 in Richtung des Doppelpfeils A in Figur 1. Das innerhalb des Fluidleitungssystems des Gerätes 1 umlaufende Wasser unterliegt der Gefahr von Verunreinigungen durch kleinste Partikel der Pflanzen, sodass eine Filterung des Wassers sinnvoll ist. Hierzu verfügt das Gerät 1 innerhalb seines Fluidleitungssystems über mehrere Filter 15 und 16, die von dem Wasser durchströmt sind und deren Funktion in der Filterung des Wassers besteht. Zudem weist das Gerät 1 eine elektronische Steuerungsvorrichtung 8 auf, deren Funktion nachfolgend noch im Zusammenhang mit der Beschreibung der Figuren 4 und 5 erläutert wird.

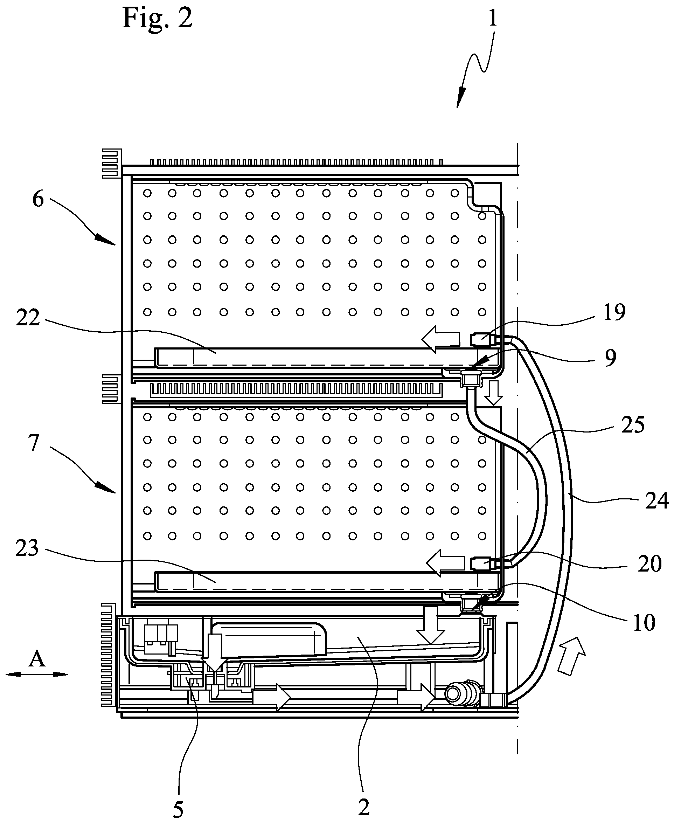

Die Figur 2 zeigt einen Blick in den Innenraum des Gerätes aus Figur 1 gemäß dem Schnittverlauf II-II aus Figur 1. erkennbar wird daraus insbesondere, dass die Pumpe 5 Wasser aus dem Wasserspeicher 2 über den Wasserschlauch 24 und den Wasserzulauf 19 in die geodätisch obere Klimakammer 6 fördert, wo die darin enthaltenen Pflanzen mit dem Wasser versorgt werden. Im Bodenbereich der Klimakammer 6 befindet sich die zuvor bereits beschriebene Wasserschale 22 mit der Ablauföffnung 9 an ihrem tiefsten Punkt, sodass überschüssiges Wasser aufgrund der vorhandenen Schwerkraft in die darunter befindliche Klimakammer 7 überführt werden kann, wozu bei dem Ausführungsbeispiel an der Ablauföffnung 9 ein Ablaufschlauch 25 vorhanden ist, der direkt mit dem Wasserzulauf 20 der unteren Klimakammer 7 verbunden ist. Ebenso kann die Ablauföffnung 9 auch das Wasser direkt in die darunter befindliche Klimakammer 7 abführen. Der Ablaufschlauch 25 wäre dann entbehrlich. Die untere Klimakammer 7 verfügt ebenfalls über eine Wasserschale 23 mit einer Ablauföffnung 10 an ihrem tiefsten Punkt, über die überschüssiges Wasser direkt in den Wasserspeicher 2 zurückführt wird. Auch dies erfolgt unter Nutzung der Schwerkraft. Aus der Darstellung der Figur 2 geht anschaulicher, als dies im Zusammenhang mit der Erläuterung der Figur 1 möglich war, hervor, dass es sich bei dem Fluidleitungssystem des erfindungsgemäßen Gerätes 1 um einen in sich geschlossenen Kreislauf handelt.

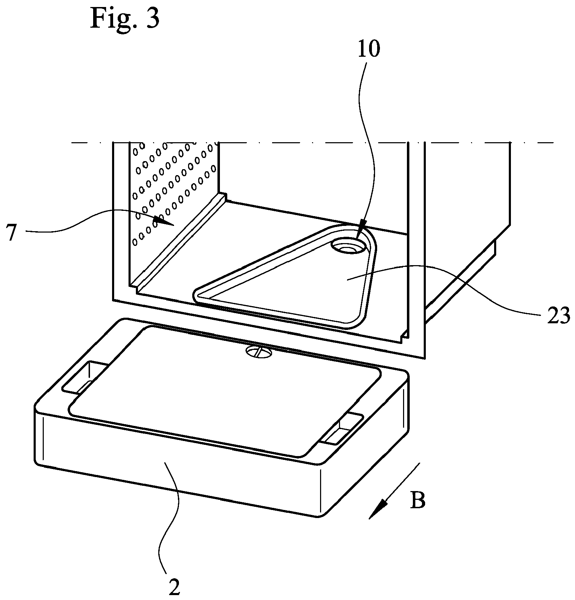

Die Figur 3 veranschaulicht ausschnittsweise den unteren Abschnitt des Gerätes 1 aus Figur 1 mit entnommenem Wasserspeicher 2 in einer Explosivdarstellung. Dabei wurde der Wasserspeicher 2 in Richtung des Pfeils B aus dem Gerät 1 heraus bewegt, wobei die seitlich in dem Gerät vorhandenen Gleitschienen 18 eine Erleichterung der Bewegung des Wasserspeichers 2 bewirken. Die Entnahmemöglichkeit des Wasserspeichers 2 aus dem Gerät 1 gestattet nicht nur eine vereinfachte Reinigung des Wasserspeichers 2, was beispielsweise in einem Geschirrspülautomaten erfolgen kann, sondern auch das Auffüllen verbrauchten Frischwassers.

In den Figuren 4 und 5 sind nachfolgend 2 Schaltstellungen einer ersten Ausführungsvariante eines Ventils 4 gezeigt, dass zum Einsatz kommt, um die Ablauföffnung 10 der Wasserschale 23 in der Klimakammer 7 zu verschließen, wenn der Wasserspeicher 2 aus dem Gerät 1 entnommen wird. Dabei zeigt die Figur 4 ausschnittsweise einen Blick auf das elektrisch schaltbare Ventil 4 in einer Offenstellung und die Figur 5 ausschnittsweise einen Blick auf das elektrisch schaltbare Ventil 4 in einer Schließstellung.

In der Figur 4 ist zunächst zu erkennen, dass der Wasserspeicher 2 in Richtung des Pfeils D in das Gerät 1 eingesetzt ist. Das Ventil 4 befindet sich unmittelbar neben der Ablauföffnung 10 der Wasserschale 23 der Klimakammer 7. Die Besonderheit der Ausführungsvariante in Figur 4 besteht darin, dass hier eine Sensoreinheit vorhanden ist, die aus einem Signalaufnehmer 27 und einem hierzu korrespondierenden Signalgeber 28 besteht. Der Signalgeber 28 ist an der dem Ventil 4 zugewandten Rückseite des Wasserspeichers 2 angeordnet, sodass das vom Signalgeber 28 ausgehende Signal von dem Signalaufnehmer 27, der bei dem dargestellten Beispiel am Gehäuse des Ventils 4 angeordnet ist, erfasst werden kann. Die Signale werden innerhalb der zuvor bereits erwähnten elektronischen Steuerungsvorrichtung 8 verarbeitet und in ein Schaltsignal des Ventils 4 umgesetzt. Bei in das Gerät 1 eingesetztem Wasserspeicher 2 wird daraufhin das Verschlusselement 26 des Ventils 4 in eine zurückgezogene Position verbracht, sodass die Ablauföffnung 10 der Wasserschale 23 der Klimakammer 7 freigegeben wird. Dies hat zur Folge, dass überschüssiges Wasser aufgrund der Schwerkraft durch die geöffnete Ablauföffnung 10 in den darunter befindlichen Wasserspeicher 2 ablaufen kann.

Wird der Wasserspeicher 2 in Richtung des Pfeils E aus dem Gerät 1 entnommen, wie dies in der Darstellung der Figur 5 ersichtlich ist, so bleibt das Signal des Signalgebers 28 an der Rückwand des Wasserspeichers 2 aus, was zur Folge hat, dass über die elektronische Steuerungsvorrichtung 8 das Ventil 4 angesteuert und das Verschlusselement 26 in Richtung des Pfeils E bewegt wird. Die Ablauföffnung 10 der Wasserschale 23 wird infolgedessen durch das Verschlusselement 26 verschlossen, sodass kein Wasser mehr über die Ablauföffnung 10 aus der Wasserschale 23 beziehungsweise aus der Klimakammer 7 in den Innenraum des Gerätes 1 abschließen kann.

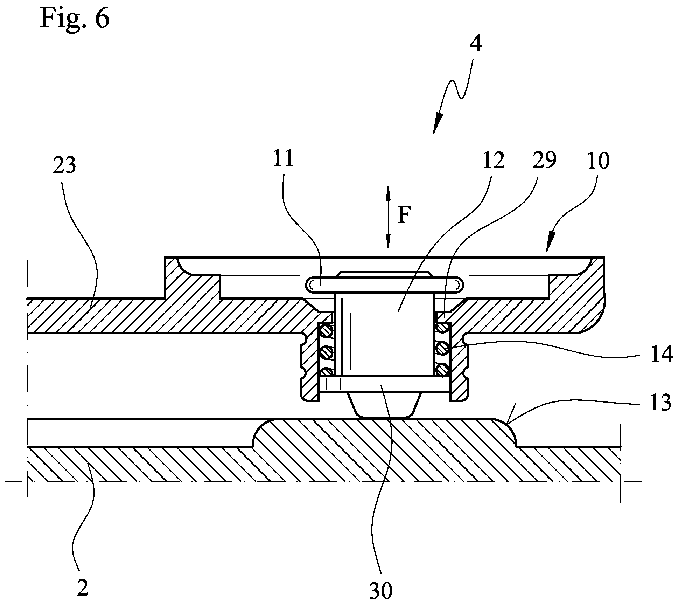

Eine alternative Ausführungsvariante eines Ventils 4 ist in der Figur 6 dargestellt. Die Figur 6 zeigt ausschnittsweise einen Blick auf ein mechanisch schaltbares Ventil 4 in einer Offenstellung. Das Ventil 4 besteht dabei aus einem Kolben 12, der vertikal innerhalb der Ablauföffnung 10 bewegbar geführt ist und von einer Feder 14 umschlossen wird, die als Druckfeder ausgebildet ist und sich an einem Absatz 29 innerhalb der Ablauföffnung 10 einerseits und andererseits an einem Flansch 30 des Kolbens 12 abstützt. Die dadurch erzeugte Druckkraft der Feder 14 führt dazu, dass bei entnommenem Wasserspeicher 2 das Ventil 4 in Richtung des Doppelpfeils F nach unten bewegt wird und die Ablauföffnung 10 verschließt. Zur Abdichtung des Verschlusses dient dabei eine von dem Kolben 12 aufgenommene Dichtung 11, bei der sich im einfachsten Fall um einen O-Ring handeln kann. Korrespondierend zu der Unterseite des Kolbens 12 ist an dem Wasserspeicher 2 eine Anlagefläche 13 ausgebildet, bei der es sich bevorzugt um einen Steg handelt, die bei in das Gerät 1 eingesetztem Wasserspeicher 2 den Kolben 12 des Ventils 4 in Richtung des Doppelpfeils F nach oben bewegt und dadurch eine Offenstellung des Ventils 4 definiert.

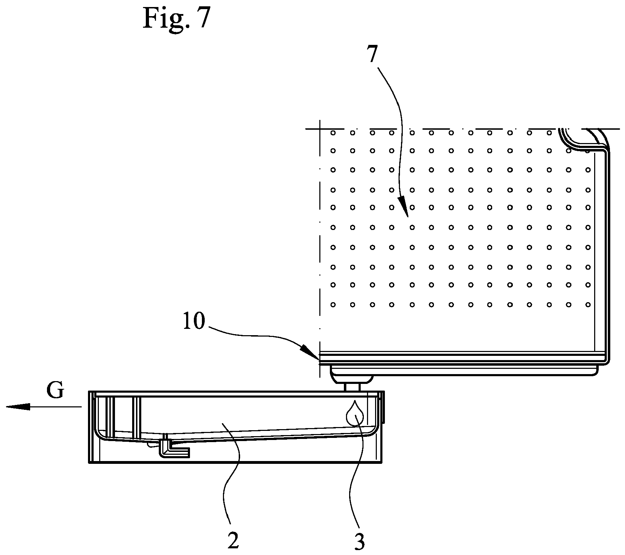

Schließlich ist in der Figur 7 eine Ausführungsvariante eines erfindungsgemäßen Gerätes 1 dargestellt, bei der das Ventil 4 öffnungsseitig des Gerätes 1 angeordnet ist, was dazu führt, dass während der Entnahme des Wasserspeichers 2, also während dessen Bewegung in Richtung des Pfeils G, das Ventil 4 weiterhin geöffnet bleibt, sodass Wasser 3 in den Wasserspeicher 2 zurücklaufen kann. Diese Möglichkeit ist gegeben, solange der Wasserspeicher 2 noch in dem Gerät 1 geführt ist. Erst nach vollständiger Entnahme des Wasserspeichers 2 aus dem Gerät 1 schließt das Ventil 4 und das Ablaufen des vorhandenen Wassers 3 aus der darüber angeordneten Klimakammer 7 wird gestoppt.

### BEZUGSZEICHENLISTE:

- 1: Gerät
- 2: Wasserspeicher
- 3: Wasser
- 4: Ventil
- 5: Pumpe
- 6: Klimakammer
- 7: Klimakammer
- 8: elektronische Steuerungsvorrichtung
- 9: Ablauföffnung
- 10: Ablauföffnung
- 11: Dichtung
- 12: Kolben
- 13: Anlagefläche (Steg)
- 14: Feder
- 15: Filter
- 16: Filter
- 17: Gehäuse
- 18: Gleitschiene
- 19: Wasserzulauf
- 20: Wasserzulauf
- 21: Führungsschienen
- 22: Wasserschale
- 23: Wasserschale
- 24: Wasserschlauch
- 25: Ablaufschlauch
- 26: Verschlusselement
- 27: Signalaufnehmer (Empfänger)
- 28: Signalgeber (Sender)
- 29: Absatz
- 30: Flansch

## Patentansprüche

1. Gerät (1), umfassend ein Fluidleitungssystem mit einem Wasserspeicher (2) zur Aufnahme und Bereitstellung von in dem Wasserspeicher (2) enthaltenem Wasser (3) für einen mit dem Gerät (1) zu erfüllenden Zweck, wobei der Wasserspeicher (2) herausnehmbar in das Gerät (1) eingesetzt ist,
**dadurch gekennzeichnet, dass**
das Fluidleitungssystem ein mit dem Wasserspeicher (2) korrespondierendes, zwischen einer Offenstellung und einer Schließstellung schaltbares Ventil (4) aufweist, dessen Offenstellung bei in das Gerät (1) eingesetztem Wasserspeicher (2) gegeben ist.

2. Gerät nach Anspruch 1,
**dadurch gekennzeichnet, dass**
das Fluidleitungssystem bei in das Gerät (1) eingesetztem Wasserspeicher (2) einen in sich geschlossenen Kreislauf bildet.

3. Gerät nach einem der vorstehend genannten Ansprüche,
**dadurch gekennzeichnet, dass**
das Fluidleitungssystem des Gerätes (1) wenigstens eine Pumpe (5) aufweist.

4. Gerät nach einem der vorstehend genannten Ansprüche,
**dadurch gekennzeichnet, dass**
das Gerät (1) mindestens zwei, in ihrer Höhenlage übereinander angeordnete und strömungsleitend miteinander gekoppelte Klimakammern (6, 7) aufweist.

5. Gerät nach Anspruch 4,
**dadurch gekennzeichnet, dass**
das mittels der Pumpe (5) in die geodätisch oberste Klimakammer (6) geförderte Wasser (3) mittels der Gravitationskraft in jede unterhalb dieser Klimakammer (6) angeordnete, weitere Klimakammer (7) abführbar ist.

6. Gerät nach einem der vorstehend genannten Ansprüche,
**dadurch gekennzeichnet, dass**
das Ventil (4) mechanisch, elektrisch oder elektromagnetisch schaltbar ist.

7. Gerät nach einem der Ansprüche 1 bis 6,
**dadurch gekennzeichnet, dass**
das Gerät (1) eine elektronische Steuerungsvorrichtung (8) zur Ansteuerung des Ventils (4) und zur Detektierung der Anwesenheit des Wasserspeichers (2) in dem Gerät (1) aufweist.

8. Gerät nach einem der Ansprüche 1 bis 6,
**dadurch gekennzeichnet, dass**
das mechanisch schaltbare Ventil (4) aus einem in eine Ablauföffnung (9, 10) einer Klimakammer (6) eingesetzten, klimakammerseitig mit einer Dichtung (11) versehenen Kolben (12) besteht, der bei in das Gerät (1) eingesetztem Wasserspeicher (2) mit einer Anlagefläche (13) des Wasserspeichers (2) korrespondierend das Ventil (4) gegen die Kraft einer Feder (14) in seiner Offenstellung fixiert.

9. Gerät nach Anspruch 8,
**dadurch gekennzeichnet, dass**
die Ablauföffnung (9, 10) einer jeden Klimakammer (6, 7) jeweils am tiefsten Punkt der Klimakammer (6, 7) angeordnet ist.

10. Gerät nach Anspruch 8 oder 9,
**dadurch gekennzeichnet, dass**
die Anlagefläche (13) des Wasserspeichers (2) als ein an dem Wasserspeicher (2) ausgebildeter, erhabener Steg ausgebildet ist.

11. Gerät nach einem der vorstehend genannten Ansprüche,
**dadurch gekennzeichnet, dass**
das Gerät (1) mindestens einen Filter (15, 16) zur Filterung des Wassers (3) aufweist.

12. Gerät nach einem der vorstehend genannten Ansprüche,
**dadurch gekennzeichnet, dass**
der Wasserspeicher (2) über Gleitschienen (18) oder Rollenführungen bewegbar in das Gerät (1) eingesetzt ist.

13. Gerät nach einem der vorstehend genannten Ansprüche,
**dadurch gekennzeichnet, dass**
das Gerät (1) ein Haushaltsgerät, wie eine Pflanzenaufzuchtstation mit mindestens einer die Aufzucht der Pflanzen ermöglichenden Klimakammer (6, 7) ist.
